# EUROPÄISCHE PATENTSCHRIFT

(11) **EP 3 630 448 B1**
(45) Veröffentlichungstag und Bekanntmachung des Hinweises auf die Patenterteilung: **27.03.2024**
(21) Anmeldenummer: 18728599.4
(22) Anmeldetag: 29.05.2018
(51) Int. Cl.: B29C 49/78, B29C 49/42, B29C 49/28, B29C 49/06

(54) **VORRICHTUNG UND VERFAHREN ZUM BEHANDELN VON BEHÄLTNISSEN MIT EINER OPTISCHEN INSPEKTIONSEINRICHTUNG**
APPARATUS AND METHOD FOR TREATING CONTAINERS WITH AN OPTICAL INSPECTION DEVICE
DISPOSITIF ET PROCEDE DE TRAITEMENT DE RECIPIENTS AVEC UN DISPOSITIF D'INSPECTION OPTIQUE

(30) Priorität: 29.05.2017 DE 102017111598
(43) Veröffentlichungstag der Anmeldung: 08.04.2020
(73) Patentinhaber: Krones AG, 93073 Neutraubling (DE)
(72) Erfinder: EFFENBERGER, Harald, 93073 Neutraubling (DE); HÖLLRIEGL, Thomas, 93073 Neutraubling (DE); BRUNNER, Andreas, 93073 Neutraubling (DE); JENDRETZKE, Christian, 93073 Neutraubling (DE)
(74) Vertreter: Hannke Bittner & Partner mbB Regensburg
(86) Internationale Anmeldenummer: PCT/EP2018/064022
(87) Internationale Veröffentlichungsnummer: WO 2018/219918

(56) Entgegenhaltungen:
- EP-A2- 2 604 412
- DE-A1-102012 105 005
- US-A- 5 866 175
- US-A1- 2015 037 518
- US-A1- 2016 023 397
- US-B2- 8 620 062

## Beschreibung

Die vorliegende Erfindung bezieht sich auf eine Vorrichtung und ein Verfahren zur Behandlung von Behältnissen, insbesondere von Kunststoffbehältnissen bzw. Kunststoffvorformlingen und insbesondere zu deren Herstellung oder der Umformung von Kunststoffvorformlingen zu Kunststoffbehältnissen. Vorrichtungen und Verfahren zur Behandlung von Kunststoffbehältnissen bzw. Kunststoffvorformlingen sind aus dem Stand der Technik seit langem bekannt.

Üblicherweise erfolgt nicht nur die Abfüllung von hochsensiblen Produkten selbst wie etwa von Produkten aus der Getränke- und Nahrungsmittelindustrie unter aseptischen Bedingungen sondern auch bereits bei der Herstellung der hierfür vorgesehenen Behältnisse werden zumindest einige der Behandlungsschritte innerhalb eines Reinraums vorgenommen. Bei der Herstellung von Kunststoffbehältnissen ist aus dem Stand der Technik bekannt, nicht erst das fertiggestellte Kunststoffbehältnis direkt vor dessen Befüllung zu sterilisieren, sondern bereits die Kunststoffvorformlinge zu sterilisieren, aus denen durch einen Streckblasvorgang die Kunststoffbehältnisse erhalten werden, und die nachfolgenden Behandlungsschritte in einem Reinraum vorzunehmen. Dieses Vorgehen bietet unter anderem den Vorteil, dass das zu sterilisierende Volumen eines Vorformlings wesentlich geringer als dasjenige des fertig geblasenen Kunststoffbehältnisses ist. Dies erlaubt wiederum eine Minimierung des für die Installation der Vorrichtung benötigten Aufstellraumes und kurze Umstellzeiten und Formatwechsel.

Aus den Vorrichtungen und Verfahren, die derzeit aus dem Stand der Technik bekannt sind, ergibt sich der Nachteil, dass durch die Anordnung mehrerer Behandlungsschritte innerhalb einer Kammer bzw. in einem Reinraum auch die Übergabepunkte, bei denen die Vorformlinge oder die Behältnisse an eine Behandlungskammer, etwa an die Blasstation, übergeben werden, für einen Bediener der Vorrichtung nur schlecht einsehbar sind. Eine manuelle Justierung an den Übergabepunkten während eines Einrichtbetriebs der Vorrichtung oder eine Störungsbehebung bedeutet in Folge nicht nur ein erhöhtes Gefahrenpotential für den Bediener, als dieser in der Maschine arbeiten muss, sondern gestaltet sich als relativ aufwändig und zieht daher bei jeglicher Art von Störungen Ausfallzeiten nach sich.

Im Stand der Technik ist bekannt, dass Überwachungssysteme für Behälterbehandlungsmaschinen für die Überwachung und Kontrolle der Kunststoffvorformlinge und Behältnisse selbst, etwa Defekte oder Verunreinigungen, sowie zur Erkennung von Fehlstellungen, verwendet werden.

DE12012105005A1, EP2604412A2 und US2016023397A1 offenbaren Vorrichtungen und Verfahren nach den Oberbegriffen der unabhängigen Ansprüchen.

Der vorliegenden Erfindung liegt die Aufgabe zugrunde, die aus dem Stand der Technik bekannten Nachteile zu überwinden und bei Beibehaltung oder weiterer Minimierung einer möglichst kompakten Bauweise der Vorrichtung gleichzeitig zu ermöglichen, dass Einstellungsänderungen an der Übergabe von Behältnissen von einer Übergabeeinrichtung an eine Behandlungseinrichtung bzw. umgekehrt möglichst zeitsparend und bedienerfreundlich realisiert werden können.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Eine erfindungsgemäße Vorrichtung zum Behandeln von Behältnissen, insbesondere Kunststoffbehältnissen und bevorzugt Kunststoffvorformlingen, weist wenigstens eine Behandlungseinrichtung, die die Behältnisse in einer vorbestimmten Weise behandelt, und wenigstens eine Übergabeeinrichtung auf, welche die Behältnisse in einem Übergabebereich an die Behandlungseinrichtung, bevorzugt vereinzelt bzw. nacheinander, übergibt und/oder an welche die Behältnisse von der Behandlungseinrichtung in einem Übergabebereich bevorzugt vereinzelt bzw. nacheinander übergeben werden. Bevorzugt handelt es sich bei der Vorrichtung um eine zur Herstellung von Kunststoffbehältnissen, in der vorteilhaft Kunststoffvorformlinge über einen (Streck-)Blasvorgang zu Kunststoffbehältnissen expandiert werden. Unter Behältnissen können dabei im nachfolgenden sowohl Vorformlinge sowie auch daraus fertig geblasene Behältnisse verstanden werden.

Unter dem Übergabebereich wird dabei bevorzugt im Wesentlichen derjenige Bereich der Vorrichtung verstanden, in dem das Behältnis von der Übergabeeinrichtung an die Behandlungseinrichtung übergeben wird bzw. in dem das Behältnis von der Behandlungseinrichtung an die Übergabeeinrichtung übergeben wird. In diesem Bereich können etwa Elemente der Behandlungseinrichtung und Elemente der Übergabeeinrichtung ineinandergreifen. Der Übergabebereich kann dabei beispielsweise von demjenigen Bereich der Vorrichtung gebildet sein, in dem sowohl wenigstens ein Element der Übergabeeinrichtung als auch wenigstens ein Element der Behandlungseinrichtung das Behältnis kontaktiert. Damit werden im Gegensatz zum Stand der Technik durch die Inspektionseinrichtung bevorzugt nicht die Behältnisse selbst in Hinblick auf Defekte oder Verunreinigungen sondern Elemente bzw. Bereiche der Vorrichtung selbst inspiziert bzw. fokussiert.

Bevorzugt ist die Inspektionseinrichtung dazu geeignet und bestimmt, den Übergabebereich während eines Einrichtbetriebs zu beobachten bzw. zu inspizieren. Der Einrichtbetrieb dient dazu, verschiedene Komponenten bzw. Elemente der Vorrichtung, die an einem Übergabevorgang des Behältnisses von der Übergabeeinrichtung zu der Behandlungseinrichtung und/oder von der Behandlungseinrichtung an die Übergabeeinrichtung, mittelbar und bevorzugt ausschließlich unmittelbar beteiligt sind, aneinander anzupassen bzw. derart an den jeweilig anderen Komponenten auszurichten, dass ein Übergabevorgang reibungslos in hoher Betriebsgeschwindigkeit vollzogen werden kann. Derartige Anpassungen können etwa die relative Anordnung bestimmter Elemente zueinander, wie etwa den Abstand eines Elementes zu einem weiteren Element der Vorrichtung, betreffen. Derartige Anpassungen können aber auch die Abstimmungen von bestimmten Bewegungsabläufen relativ zueinander, etwa den Bewegungsabläufen wenigstens einer Übergabeeinrichtung gegenüber einer weiteren Übergabeeinrichtung und/oder einer oder mehrerer Behandlungseinrichtung(en) betreffen. Konkret kann dies etwa die Einstellung von Transportgeschwindigkeiten verschiedener Transporteinrichtungen oder aber eine Einstellung der relativen Transportabstände von Behältnissen einer Vereinzelungseinrichtung betreffen.

Bevorzugt nimmt die Inspektionseinrichtung wenigstens ein Video bzw. eine Videosequenz auf. Bevorzugt wird dieses Video bzw. die Aufnahme, besonders bevorzugt drahtlos und vorteilhaft über Wi-Fi, an eine Empfangseinrichtung, welche bevorzugt eine Anzeigeeinrichtung (Display) und/oder eine Bedieneinrichtung aufweist oder mit einer solchen verbunden ist, übermittelt. Bevorzugt ist die Empfangseinrichtung bzw. das Display mobil bzw. tragbar und kann etwa am Handgelenk des Bedieners getragen werden, was sich vorteilhaft auf die Bedienerfreundlichkeit auswirkt. Bevorzugt kann es sich bei der Empfangseinrichtung um ein Armband mit Display und/oder ein Laptop, ein Tablet und/oder ein Smartphone handeln. Bevorzugt werden an die Empfangseinrichtung von der Inspektionseinrichtung (bevorzugt von den Inspektionseinrichtungen) Life-Bilder übertragen.

Bevorzugt können diese Aufnahmen der Inspektionseinrichtung (außerhalb der Behandlungseinrichtung) auf eine Speicherkarte, bevorzugt auf eine SD-Speicherkarte, aufgezeichnet werden.

Bevorzugt kann jeder Inspektionseinrichtung (wenigstens und bevorzugt genau) eine Empfangseinrichtung und insbesondere auch wenigstens eine und bevorzugt genau eine Anzeigeeinrichtung zugeordnet sein.

Bevorzugt handelt es sich bei der Inspektionseinrichtung (bei den Inspektionseinrichtungen jeweils) um eine Kamera, insbesondere um eine Action-Cam. Bevorzugt ist die Inspektionseinrichtung dazu geeignet, mehr als 50 Bilder pro Sekunde, bevorzugt mehr als 100 Bilder pro Sekunde, weiter bevorzugt mehr als 200 Bilder pro Sekunde und besonders bevorzugt mit einer maximalen Bildrate von 240 Bilder pro Sekunde aufzunehmen.

Erfindungsgemäss und beansprucht wird, dass die Inspektionseinrichtung(en) wenigstens einen Übergabebereich etwa zu einem Zeitpunkt inspiziert, an dem keine Behältnisse übergeben werden. Dies ist darauf gerichtet, ausschließlich das Ineinandergreifen einzelner Elemente der Vorrichtung, etwa der zeitabhängigen relativen Anordnung von Elementen der Übergabeeinrichtung gegenüber Elementen der Behandlungseinrichtung zu beobachten.

Ferner ist denkbar, dass die Inspektionseinrichtung(en) dazu geeignet und bestimmt ist/sind, wenigstens einen Übergabebereich der Vorrichtung außerhalb des Produktionsbetriebes und bevorzugt in einem eigens vorgesehenen Einstellbetrieb bzw. Fehleranalysebetrieb zu inspizieren. In einem derartigen Einstellbetrieb bzw. Fehleranalysebetrieb können beispielsweise wenigstens Elemente der Vorrichtung mit reduzierter Geschwindigkeit betrieben oder einzelne Verfahrensschritte nicht durchgeführt werden. Beispielsweise kann in einem derartigen Einstellbetrieb bzw. Fehleranalysebetrieb in einem Sterilisationsmodul die Beaufschlagung der Behältnisse/Vorformlinge mit Sterilisationsmittel wie Wasserstoffperoxid nicht vorgenommen werden. Dies erlaubt etwa eine Anbringung von Inspektionseinrichtungen (Kameras) innerhalb der Sterilisationskammer/ innerhalb der Sterilisationseinrichtung, die bei Kontakt mit Wasserstoffperoxid etwa beschädigt würden.

Bevorzugt ist eine Steuerungseinrichtung vorgesehen, die dazu geeignet und bestimmt ist, die Vorrichtung in einem Einstellbetrieb bzw. Fehleranalysebetrieb zu betreiben, in der beispielsweise die Behältnisse mit angepasster (reduzierter) Geschwindigkeit übergeben und/oder transportiert werden, und/oder einzelne Behandlungsschritte, die an den Behältnissen von wenigstens einer Behandlungseinrichtung während des gewöhnlichen Produktionsbetriebs (Betriebs der Vorrichtung) vorgenommen werden, nicht vorgenommen werden.

Mit anderen Worten ist die Inspektionseinrichtung bevorzugt nicht primär auf die Inspektion der Behältnisse selbst, sondern auf die Bewegung und relative Anordnung der Übergabeeinrichtung im Vergleich zur Behandlungseinrichtung gerichtet. Es ist aber auch möglich, über das Verhalten der Behältnisse während ihrer Übergabe Rückschlüsse auf die relative Bewegung bzw. die relative Anordnung der Übergabeeinrichtung im Vergleich zur Behandlungseinrichtung zu ziehen.

Bevorzugt sind mehr als eine, besonders bevorzugt mindestens zwei und vorteilhaft mehr als drei und besonders vorteilhaft eine Vielzahl von Inspektionseinrichtungen vorgesehen, die jeweils dazu geeignet und bestimmt sind, wenigstens abschnittsweise und bevorzugt vollständig den Übergabebereich bevorzugt zumindest zeitweise während eines (gegebenenfalls potentiellen) Übergabevorganges eines Behältnisses optisch zu inspizieren.

Bevorzugt können mittels der Inspektionseinrichtungen mehrere Übergabebereiche, bevorzugt vor allem die kritischen bzw. fehleranfälligeren Übergabebereiche, inspiziert und besonders bevorzugt auf einer Anzeigeeinrichtung deren Aufnahmen ausgegeben werden. Dies bietet den Vorteil, dass die Überwachung und Justierung aller Übergabebereiche gleichzeitig erfolgen kann.

Bevorzugt wird/werden von der wenigstens einen Inspektionseinrichtung/en insbesondere Bereiche der Vorrichtung überwacht, die ausgewählt sind aus der Gruppe bestehend aus Übergabepunkte bzw. Übergabebereiche, Hebelstellungen, Verriegelungen oder Werkzeugpositionen und/oder Kombinationen hieraus.

In einer vorteilhaften Ausführungsform ist wenigstens eine Inspektionseinrichtung und bevorzugt sind mehrere Inspektionseinrichtungen innerhalb eines Reinraumes angeordnet. Dies ist insbesondere vorteilhaft, wenn wenigstens eine Behandlungseinrichtung (zumindest abschnittsweise) innerhalb eines Reinraumes angeordnet ist. Vorteilhaft umgibt der Reinraum den Transportpfad der Behältnisse (zumindest abschnittsweise und bevorzugt zumindest entlang wenigstens eines zu inspizierenden Übergabebereiches) kanalartig. Weiterhin ist dieser Reinraum mittels wenigstens einer Wandung gegenüber einer unsterilen Umgebung abgegrenzt.

Bevorzugt ist die Behandlungseinrichtung besonders bevorzugt vollständig von einem Gehäuse umgeben, innerhalb dessen vorteilhaft aseptische Bedingungen vorherrschen. Bevorzugt ist die Inspektionseinrichtung an einer Innenwandung dieses Gehäuses angeordnet, besonders bevorzugt über eine Halterungseinrichtung.

Die Anbringung einer Inspektionseinrichtung bietet den Vorteil, dass für den Bediener das Gefahrenpotential verringert wird, da er nicht mehr innerhalb der Vorrichtung Störungen manuell beheben muss. Zugleich kann aber bevorzugt eine zeitgleiche Überwachung, Analyse und wenn nötig automatische Korrektur der Vorrichtungsparameter bzw. der Einstellungen der Vorrichtung vorgenommen werden. Bevorzugt können Störpunkte in der Vorrichtung, bevorzugt durch die Analyse der Aufnahmen der Inspektionseinrichtung(en) verbessert bzw. behoben werden.

In einer weiteren vorteilhaften Ausführungsform handelt es sich bei der Übergabeeinrichtung um einen der Behandlungseinrichtung zugeordneten Einlaufstern und/oder Auslaufstern. Bevorzugt handelt es sich damit bei dem Übergabevorgang um eine Sternübergabe.

In einer weiteren vorteilhaften Ausführungsform handelt es sich bei der Behandlungseinrichtung um ein Sterilisationsmodul und/oder ein Streckblasmodul.

Bevorzugt kann es sich bei (wenigstens) einer Übergabeeinrichtung (besonders bevorzugt bei mehreren Übergabeeinrichtungen) auch um ein Transferrad handeln, etwa ein Kunststoffvorformling-Transferrad, welches Kunststoffvorformlinge transportiert, oder aber ein sogenanntes Flaschen-Transferrad, welches fertig geblasene Flaschen transportiert. Bevorzugt ist daher die Inspektionseinrichtung derart angeordnet und/oder ausgerichtet, dass sie wenigstens abschnittsweise und bevorzugt vollständig den Übergabebereich von der Übergabeeinrichtung wie etwa einem Einlaufstern in die Behandlungskammer bzw. in das Behandlungsmodul, etwa ein Sterilisationsmodul oder ein Streckblasmodul oder ein Heizmodul, und/oder von dort zu einer Übergabeeinrichtung wie einem Auslaufstern inspiziert bzw. aufnimmt und damit bevorzugt überwacht.

Bevorzugt kann die Inspektionseinrichtung derart angeordnet und/oder ausgerichtet sein, dass sie wenigstens abschnittsweise und bevorzugt vollständig den Übergabebereich von einer Übergabeeinrichtung wie etwa einem Einlaufstern an eine Blasstation bzw. in ein Blasmodul und/oder von dort zu einer Übergabeeinrichtung wie einem Auslaufstern inspiziert bzw. aufnimmt und damit bevorzugt überwacht.

In einer weiteren vorteilhaften Ausführungsform inspiziert die Inspektionseinrichtung den Übergabebereich von unten. Bevorzugt ist die Inspektionseinrichtung unterhalb der Transportebene bzw. dem Transportpfad der Behältnisse, d.h. der Ebene bzw. dem Pfad, entlang dem die Behältnisse transportiert werden (bevorzugt während dem Übergabevorgang), angeordnet. Es wäre jedoch auch denkbar, dass die Inspektionseinrichtung den Übergabebereich von der Seite und/oder von oben inspiziert.

Die Inspektionseinrichtung kann dabei im Wesentlichen unmittelbar unter dem Übergabebereich angeordnet sein. Bevorzugt ist sie jedoch nicht unmittelbar unter dem Übergabebereich angeordnet, sondern ist unter einem bevorzugt festen aber insbesondere bevorzugt einstellbaren Winkel angeordnet. Bevorzugt inspiziert die Inspektionseinrichtung daher den Übergabebereich von schräg unten. Damit schließt die Inspektionseinrichtung mit der Bodennormalen (Normale zur Bodenfläche (horizontale Fläche) der Vorrichtung) vorteilhaft einen Winkel ein, der kleiner als 90° ist, bevorzugt kleiner als 70°, bevorzugt kleiner als 45° und besonders bevorzugt kleiner als 30°. Bevorzugt ist dieser Winkel größer als 10°, besonders bevorzugt größer als 30° und besonders bevorzugt größer als 50°.

In einer weiteren vorteilhaften Ausführungsform ist die wenigstens eine Inspektionseinrichtung und sind bevorzugt alle Inspektionseinrichtungen stationär in der Vorrichtung angeordnet. Damit handelt es sich bevorzugt um ein fest stehendes Sensorsystem bzw. System an Inspektionseinrichtungen. Vorteilhaft sind fest verbaute Halterungen vorgesehen, die dazu geeignet und bestimmt sind, bevorzugt (zumindest auch teilweise) zusammen mit der Inspektionseinrichtung bzw. mit den Inspektionseinrichtungen permanent in der Vorrichtung zu verbleiben, insbesondere bevorzugt auch nach abgeschlossenem Testbetrieb und/oder Einrichtbetrieb, während dem Normalbetrieb der Vorrichtung.

In einer weiteren vorteilhaften Ausführungsform ist/sind die wenigstens eine Inspektionseinrichtung und bevorzugt alle Inspektionseinrichtungen an einem sich (bevorzugt gegenüber dem Transportpfad der Behältnisse) bewegenden Element der Vorrichtung, bevorzugt der Behandlungseinrichtung angeordnet ist/sind und wird/werden bevorzugt mitgeführt. Bevorzugt ist etwa wenigstens eine Inspektionseinrichtung und bevorzugt mehrere an einem Blasrad eines Blasmoduls der Vorrichtung angeordnet. Bevorzugt handelt es sich um mitfahrende Inspektionseinrichtungen bzw. ein System mitfahrender Inspektionseinrichtungen.

Besonders bevorzugt werden die Inspektionseinrichtungen bzw. wird wenigstens eine Inspektionseinrichtung rotatorisch (etwa von der Behandlungseinrichtung) bewegt. Denkbar ist aber auch eine translatorische Bewegung und/oder eine Kombination hieraus. Vorteilhaft bewegt sich wenigstens eine und bevorzugt mehrere Inspektionseinrichtung(en) zumindest abschnittsweise bzw. zumindest zeitweise ebenfalls entlang des Transportpfades der Behältnisse. Wenigstens ein Teil der Inspektionseinrichtungen kann aber auch gegenüber dem Transportpfad der Behältnisse stationär angeordnet sein.

Möglich ist auch eine Kombination einer fest stehenden Inspektionseinrichtung bzw. eines fest stehenden Systems an Inspektionseinrichtungen mit wenigstens einer mitfahrenden Inspektionseinrichtung bzw. einem System an mitfahrenden Inspektionseinrichtungen.

Bevorzugt ist wenigstens eine bzw. sind die Inspektionseinrichtung(en) oberhalb des Transportpfades der Behältnisse an der Behandlungseinrichtung wie etwa dem Blasmodul angeordnet. Zur Überwachung eines Übergabebereiches an oder aus einer Blasstation kann die Inspektionseinrichtung etwa an einer benachbarten Blasstation angeordnet sein. Bevorzugt ist wenigstens eine und besonders bevorzugt sind alle Inspektionseinrichtungen an dem Schwenklager und vorteilhaft an dessen Gehäuse der jeweiligen Blasstationen angeordnet.

In einer weiteren vorteilhaften Ausführungsform verläuft die Inspektionsrichtung der Inspektionseinrichtung im Wesentlichen in oder entgegen der Transportrichtung der Behältnisse. Bevorzugt ist die Inspektionseinrichtung derart angeordnet bzw. ausgerichtet, dass dessen Inspektionsrichtung (bzw. Kameraposition) im Wesentlichen in Laufrichtung (des Blasrades bzw. der mitgeführten Behältnisse) verläuft. Bevorzugt kann die Inspektionseinrichtung aber auch derart angeordnet bzw. ausgerichtet sein, dass dessen Inspektionsrichtung (bzw. Kameraposition) entgegen der Laufrichtung (des Blasrades bzw. der mitgeführten Behältnisse) verläuft. Bevorzugt ist dies der Fall, wenn als Behandlungseinrichtung ein Blasmodul vorgesehen ist, mit anderen Worten wenn wenigstens ein Übergabebereich innerhalb eines Blasmoduls inspiziert werden soll. Üblicherweise weist ein Blasmodul ein Blasrad mit einer Vielzahl von Blasstationen auf, in denen jeweils ein (Kunststoff-)Vorformling zu einem (Kunststoff-) Behältnis (Flasche) expandiert wird.

Bevorzugt ist je Blasstation (genau) eine Inspektionseinrichtung vorgesehen. Diese kann derart angeordnet sein, dass diese wenigstens (abschnittsweise) einen Übergabebereich des Blasmoduls, bevorzugt einen Übergabebereich, in dem von einer Übergabeeinrichtung wie einem Einlaufstern ein Kunststoffvorformling an die jeweils zugeordnete Blasstation übergeben wird, und/oder (wenigstens bereichsweise) einen Übergabebereich, in dem das expandierte Kunststoffbehältnis aus der Blasstation an eine Übergabeeinrichtung wie einen Auslaufstern übergeben wird, inspiziert. In diesem Fall verläuft bevorzugt die Inspektionsrichtung nicht im Wesentlichen parallel zur Laufrichtung des Blasrades bzw. zur Transportrichtung der Blasstation bzw. des zu behandelnden Behältnisses.

Es ist möglich, dass die Inspektionseinrichtung derart an der Blasstation angeordnet ist und bevorzugt einen derartigen (weiten) Aufnahmewinkel aufweist, dass diese sowohl den Übergabebereich, an dem der Kunststoffvorformling an die Blasstation übergeben wird, als auch den Übergabebereich, an dem das fertig behandelte (expandierte) Behältnis aus der Blasstation abgeführt wird (bevorzugt an eine Übergabeeinrichtung wie etwa an einen Auslaufstern), inspizieren kann.

Bevorzugt kann die Inspektionseinrichtung (rotatorisch und/oder translatorisch) bewegbar, vorteilhaft drehbar und/oder schwenkbar an der Vorrichtung angeordnet sein. Denkbar ist beispielsweise auch, dass die Ausrichtung der Inspektionseinrichtung in Abhängigkeit von der Winkelstellung des Blasrades bzw. der Blasstation abhängt und die Inspektionsrichtung der Inspektionseinrichtung bei einer ersten Winkelstellung des Blasrades bzw. der Blasstation in Richtung des ersten Übergabebereichs, an dem der Kunststoffvorformling an die Blasstation übergeben wird, verläuft und die bevorzugt bei einer zweiten Winkelstellung des Blasrades bzw. der Blasstation in Richtung des zweiten Übergabebereichs, an dem das fertig behandelte (expandierte) Behältnis aus der Blasstation abgeführt wird (bevorzugt an eine Übergabeeinrichtung wie etwa an einen Auslaufstern), verläuft.

Bevorzugt ist allerdings wenigstens eine Inspektionseinrichtung und besonders bevorzugt ist je Blasstation wenigstens eine Inspektionseinrichtung derart an einer Blasstation des Blasmoduls angeordnet und/oder derart ausgerichtet, dass diese bevorzugt den Übergabebereich wenigstens einer der übrigen Blasstationen, besonders bevorzugt einer benachbarten Blasstation, inspiziert. Mit anderen Worten inspiziert die an einer Blasstation angeordnete Inspektionseinrichtung gerade nicht einen Übergabebereich dieser Blasstation, sondern denjenigen einer anderen, vorzugsweise einer benachbarten Blasstation des Blasmoduls. Dies bietet den Vorteil, dass die Inspektionseinrichtung relativ platzsparend etwa oberhalb der Blasformen an der Blasstation angeordnet werden kann und vergleichsweise kurze Halterungen zur ausreichenden Ausrichtung der Inspektionseinrichtung auf den zu inspizierenden Bereich ausreichen.

Dabei kann, wie obig beschrieben, die Inspektionsrichtung der Inspektionseinrichtung in Laufrichtung des Blasrades verlaufen und die Inspektionseinrichtung daher etwa einen Übergabebereich einer ihr (bevorzugt unmittelbar in Laufrichtung) vorstehenden Blasstation inspizieren. Verläuft die Inspektionsrichtung gegen die Laufrichtung des Blasrades, ist vorzugsweise vorgesehen, dass die Inspektionseinrichtung den Übergabebereich einer ihr nachfolgenden und bevorzugt ihr direkt nachfolgenden Blasstation inspiziert.

Bevorzugt verlaufen die Inspektionsrichtungen von wenigstens einer (bevorzugt genau einer) Inspektionseinrichtung je Blasstation eines Blasmoduls entweder in Laufrichtung des Blasrades oder gegen die Laufrichtung des Blasrades, d.h. bevorzugt alle in gleicher Ausrichtung.

Bevorzugt verläuft die Inspektionsrichtung wenigstens einer Inspektionseinrichtung und bevorzugt aller Inspektionseinrichtungen im Wesentlichen nicht in einer horizontalen Ebene, sondern in einem hierzu abweichenden Neigungswinkel. Bevorzugt ist die Inspektionseinrichtung etwas nach unten geneigt. Bevorzugt ist der Neigungswinkel, den die Inspektionsrichtung mit einer horizontalen Ebene (durch die Inspektionseinrichtung) einschließt, aus einem Bereich zwischen 5° und 45°, bevorzugt aus einem Bereich zwischen 10° und 30° gewählt und besonders bevorzugt ist dieser kleiner als 20°. Wiederum weisen bevorzugt je Blasstation des Blasmoduls mindestens eine weitere und bevorzugt alle Inspektionseinrichtungen denselben Neigungswinkel auf.

Denkbar ist auch, dass je Blasstation mehr als eine, vorzugsweise genau zwei oder aber auch mehr als zwei Inspektionseinrichtungen an einem Blasmodul angeordnet sind. Damit könnte etwa die Inspektionsrichtung einer ersten Inspektionseinrichtung einer Blasstation in Laufrichtung des Blasrades verlaufen und die Inspektionseinrichtung einer zweiten Inspektionseinrichtung einer Blasstation entgegen der Laufrichtung des Blasrades verlaufen.

In einer weiteren vorteilhaften Ausführungsform ist (mindestens) eine bevorzugt an der oder neben der Inspektionseinrichtung angeordnete Beleuchtungseinrichtung vorgesehen, die zumindest einen Teil der Behandlungseinrichtung und/oder den Übergabebereich bevorzugt zumindest zeitweise während eines Übergabevorganges und/oder einer Bildaufnahme der Inspektionseinrichtung beleuchtet. Bevorzugt ist für jede bzw. an oder neben jede Inspektionseinrichtung mindestens und bevorzugt genau eine Beleuchtungseinrichtung vorgesehen.

Bevorzugt beleuchtet die Beleuchtungseinrichtung den Übergabebereich mit diffusem Licht und/oder mit Blitzlicht (vorteilhaft stroboskopartig) und/oder in Spotbeleuchtung, in der nur ein (eng/scharf) begrenzter Bereich (etwa im Wesentlichen ausschließlich der Übergabebereich oder ein Abschnitt hiervon) (mit vergleichbar hoher Intensität) ausgeleuchtet wird. Bevorzugt ist die Beleuchtungseinrichtung dazu geeignet, zwischen mehreren Beleuchtungsmodi zu wechseln, etwa einer Beleuchtung mit diffusem Licht und/oder einer Weitwinkelbeleuchtung und/oder einer Blitzlicht-Beleuchtung und/oder einer Spotbeleuchtung und/oder einem Sport-Modus. In jedem Beleuchtungsmodus kann darüber hinaus vorteilhaft eine unterschiedlich hohe Leuchtstärke gewählt werden, bevorzugt jeweils eine mit hoher Leistung und eine mit niedriger Leistung.

Bevorzugt weist die Beleuchtungseinrichtung eine LED als Lichtquelle oder mehrere LEDs als Lichtquellen auf. Bevorzugt weist sie mehr als eine Lichtquelle, besonders bevorzugt mindestens zwei oder mindestens drei Lichtquellen (LEDs) auf. In Abhängigkeit des gewählten Beleuchtungsmodus ist bevorzugt eine Lichtquelle (eine LED), zwei Lichtquellen (zwei LEDs) oder aber drei Lichtquellen (drei LEDs) aktiviert.

Bevorzugt ist die mindestens eine Beleuchtungseinrichtung bzw. sind die Beleuchtungseinrichtungen geeignet, jeweils eine Leuchtstärke von mindestens 50 Lumen, bevorzugt mindestens 100 Lumen, weiter bevorzugt mindestens 150 Lumen, weiter bevorzugt mindestens 150 Lumen, weiter bevorzugt mindestens 200 Lumen, weiter bevorzugt mindestens 250 Lumen, weiter bevorzugt mindestens 300 Lumen und besonders bevorzugt mindestens 400 Lumen bereitzustellen.

Bevorzugt kann der Leuchtwinkel der Beleuchtungseinrichtung unterschiedlich groß gewählt werden. Besonders bevorzugt kann zwischen einem schmalen und einem weiten und/oder einem ultra-weiten Leuchtwinkel gewählt werden. Bevorzugt kann der Leuchtwinkel der Beleuchtungseinrichtung in dem Bereich zwischen 60° und 80°, bevorzugt zwischen 65° und 75° und besonders bevorzugt zwischen 70° und 75° liegen (Leuchtwinkel weit). Bevorzugt kann der Leuchtwinkel der Beleuchtungseinrichtung in dem Bereich zwischen 20° und 60°, bevorzugt zwischen 30° und 60°, bevorzugt zwischen 40° und 50° und besonders bevorzugt zwischen 43° und 48° liegen (Leuchtwinkel schmal). Bevorzugt kann der Leuchtwinkel der Beleuchtungseinrichtung aber auch größer sein als 70°, bevorzugt größer als 75° und besonders bevorzugt größer als 80° oder 90° (Leuchtwinkel ultra-weit). Bevorzugt kann die Belichtungszeit variiert werden, bevorzugt kann diese um mindestens einen Faktor 2, bevorzugt um mindestens einen Faktor 4 erhöht oder verringert werden. Bevorzugt ist die Beleuchtungseinrichtung an bzw. (unmittelbar) neben der Inspektionseinrichtung angeordnet. Bevorzugt ist die Beleuchtungseinrichtung an derselben Halteeinrichtung angeordnet, an der auch die wenigstens eine Inspektionseinrichtung angeordnet ist. Bevorzugt ist die Beleuchtungseinrichtung derart angeordnet und/oder ausgerichtet, dass sie den zu inspizierenden Bereich wenigstens einer Inspektionseinrichtung (bevorzugt der ihr zugeordneten Inspektionseinrichtung) ausleuchtet.

In einer weiteren vorteilhaften Ausführungsform ist eine bevorzugt mobile Bedieneinrichtung, mittels der Einstellungsänderungen an wenigstens einer Inspektionseinrichtung (vorzugsweise an allen Inspektionseinrichtungen) und/oder wenigstens einer Behandlungseinrichtung (vorzugsweise allen Behandlungseinrichtungen) und/oder der Übergabeeinrichtung (vorzugsweise allen Übergabeeinrichtungen) vorgenommen werden können, und/oder eine bevorzugt mobile Anzeigeneinrichtung, mittels der von der Inspektionseinrichtung aufgenommene Daten ausgegeben und/oder visualisiert werden können, vorgesehen. Bevorzugt erfolgt eine derartige Ausgabe bzw. Visualisierung in Echtzeit. Dies bietet den Vorteil, dass der Bediener simultan bzw. zeitgleich Einstellungsänderungen an der Vorrichtung, insbesondere an der Übergabeeinrichtung und/oder der Behandlungseinrichtung, vornehmen kann und eine sofortige Rückmeldung über die Auswirkungen der Einstellungsänderungen erhält. Bevorzugt werden die von der wenigstens einen und insbesondere von allen Inspektionseinrichtungen übermittelten Daten gespeichert. Es wäre jedoch auch denkbar, dass diese Bedieneinrichtung stationär an der Vorrichtung angeordnet ist.

Bei einer weiteren vorteilhaften Ausführungsform weist die Vorrichtung eine Speichereinrichtung zum wenigstens zeitweisen Speichern von aufgenommenen Bildsequenzen und/oder Filmsequenzen auf. So kann etwa die Inspektionseinrichtung eine Bildaufnahmeeinrichtung wie eine Kamera aufweisen und die von dieser Bildaufnahmeeinrichtung oder Kamera aufgenommenen Bild- oder Filmsequenzen können in der Speichereinrichtung gespeichert werden. Dabei ist es denkbar, dass aufgenommene Bildsequenzen oder Videos mittels einer Ausgabeeinrichtung ausgebbar sind. Insbesondere ist dabei eine verlangsamte Wiedergabe (Zeitlupe) möglich, um so eine bessere visuelle Analyse der aufgenommenen Sequenzen zu ermöglichen. Auch ist bevorzugt eine Ausgabe von einzelnen Bildern einer Bildsequenz denkbar oder auch eine Wiedergabe eines Standbildes. Daneben ist auch eine vergrößerte Wiedergabe von Ausschnitten von aufgenommenen Bildern möglich. Bevorzugt ist eine derartige verlangsamte Wiedergabe durch einen Maschinenbediener abrufbar.

Einstellungsänderungen können bevorzugt an den Übergabeparametern vorgenommen werden, die ausgewählt sind aus einer Gruppe enthaltend etwa den relativen Abstand und/oder der Winkelstellung und/oder Bewegungsgeschwindigkeit der an der Übergabe beteiligten Elemente der Übergabeeinrichtung im Verhältnis zu den an der Übergabe beteiligten Elementen der Behandlungseinrichtung, beispielsweise der Abstand der Rotationsachsen eines Einlaufsterns oder eines Auslaufsterns zu der Rotationsachse eines Blasrades (oder eines Sterilisationsmoduls).

In einer weiteren vorteilhaften Ausführungsform weist die Vorrichtung eine Steuerungseinrichtung auf, die dazu geeignet und bestimmt ist, in Abhängigkeit der von der Inspektionseinrichtung aufgenommenen Daten (automatisch und/oder manuell) Änderungen an den Übergabeparametern wenigstens einer Übergabeeinrichtung (bevorzugt mehrere Übergabeeinrichtungen) und/oder wenigstens einer Behandlungseinrichtung und bevorzugt mehrere Behandlungseinrichtungen vorzunehmen. Bevorzugt ist eine Auswerteeinrichtung, insbesondere bevorzugt außerhalb eines Reinraumes, vorgesehen, die etwa aus der bzw. aus den von der Inspektionseinrichtung aufgenommenen Aufnahme(n) ein Fehlerbild identifiziert oder auch bestimmte Übergabeparameter wie den obig genannten Abstand der Drehachsen oder Übergabeelemente zueinander auswerten bzw. auslesen kann. Dabei bestimmt die Auswerteeinrichtung bevorzugt eine Abweichung des Ist-Zustandes von einem vorgegebenen Soll-Zustand und überwacht, ob sich der Ist-Zustand noch innerhalb oder bereits außerhalb eines etwaigen ebenfalls vorgegebenen Toleranzbereiches befindet. Bevorzugt ist eine Speichereinrichtung, insbesondere bevorzugt außerhalb eines Reinraumes, vorgesehen, in der vorgegebene Ist-Zustände der Übergabeparameter und etwaige Toleranzbereiche abgelegt sind und von der Auswerteeinrichtung abgerufen werden können.

Durch die Verwendung eines optischen Sensorsystems wird hiermit eine Möglichkeit bzw. ein Hilfsmittel geschaffen, welches schlecht einsehbare Stellen in der Behälterbehandlungsmaschine überwacht, insbesondere die oben genannten Übergabepunkte, Hebelstellungen, Verriegelungen oder Werkzeugpositionen. Das System kann insbesondere anhand festgelegter Parameter bevorzugt automatisch Störungen, etwa Änderungen der Maschinenparameter, mechanische Veränderungen oder ähnliches erkennen, analysieren und selbstständig beheben. Zudem kann eine Korrektur über ein Bedienfeld, etwa bei dem mitfahrenden Inspektionssystem/Sensorsystem, veranlasst werden und bei einer Fehlstellung der Übergabeposition(en) kann eine manuelle Einstellung vorgenommen werden. Dieses Sensorsystem kann, wie obig bereits beschrieben, sowohl fest als auch mitfahrend montiert sein, je nachdem welcher Punkt innerhalb der Maschine überwacht werden soll und welche Montageart für den jeweiligen Überwachungspunkt vorteilhafter ist. Somit befindet sich das optische Inspektionssystem/Sensorsystem bei jeder Arbeitseinstellung wie etwa dem Produktionsbetrieb, dem Wartungsbetrieb und/oder dem Wechselbetrieb an den zu beobachtenden Positionen.

Bevorzugt ist die wenigstens eine Inspektionseinrichtung bzw. sind die Inspektionseinrichtungen fest verbaut und können nicht hinein- und/oder herausgefahren werden. Des Weiteren kann bevorzugt eine visuelle Analyse anhand des gespeicherten und von der Inspektionseinrichtung aufgenommenen Bildmaterials, insbesondere in Zeitlupe, von dem Bediener vorgenommen werden.

In einer weiteren vorteilhaften Ausführungsform ist die Inspektionseinrichtung mittels einer Klemmbefestigung, einer Schraubbefestigung und/oder einer Schnellbefestigung (wie etwa einer Schnappsicherung) an der Vorrichtung angeordnet.

Als Schnellbefestigungen wären etwa eine bajonettartige Befestigung oder eine Schnappbefestigung denkbar. Diese erlauben eine relativ schnelle und auch dichte Befestigung der Inspektionseinrichtung an der Vorrichtung und andererseits erlaubt eine derartige Befestigung auch ein sehr schnelles Abnehmen. Zur Befestigung der Inspektionseinrichtung an der Blasstation, etwa an dessen Schwenklager(-gehäuse), kann dagegen eine Klemmbefestigung vorteilhaft sein, mittels der die Inspektionseinrichtung bevorzugt an einer Schiene an der Blasstation angeordnet werden kann. Die Halteeinrichtung wenigstens einer Inspektionseinrichtung kann aber auch teleskopartig und/oder stangenartig ausgebildete Arme aufweisen, die bevorzugt gegeneinander verdrehbar oder verschwenkbar sind. Damit kann eine Inspektionsrichtung bzw. Anordnung einer Inspektionseinrichtung leicht modifiziert werden.

Es ist möglich, dass wenigstens eine Inspektionseinrichtung/Kamera während des Produktionsbetriebes aus der Vorrichtung entfernt werden muss. Insbesondere kann die Kamera bzw. die Inspektionseinrichtung nicht bei der Produktion von Wasserstoffperoxid innerhalb des Gehäuses bzw. in der Kammer verbleiben und kann zu dieser Zeit nicht verwendet werden. Daher sind insbesondere in der Sterilisationseinrichtung vorgesehene Inspektionseinrichtungen (schnell) abnehmbar an der Vorrichtung angeordnet.

Erfindungsgemäß wird mittels wenigstens einer Inspektionseinrichtung wenigstens abschnittsweise und bevorzugt vollständig zumindest ein Teil der Behandlungseinrichtung und/oder der Übergabebereich zumindest zeitweise während eines Übergabevorganges eines Behältnisses optisch inspiziert.

Bevorzugt übermittelt die wenigstens eine Inspektionseinrichtung die von ihr aufgenommenen Daten bzw. die Inspektionseinrichtungen die von ihnen aufgenommenen Daten an eine vorzugsweise außerhalb eines Reinraumes angeordnete Empfangseinrichtung, die bevorzugt eine Anzeigeeinrichtung und/oder eine Bedieneinrichtung aufweisen kann.

Bevorzugt handelt es sich bei dem Verfahren um ein Verfahren im Einrichtbetrieb und/oder im Fehleranalysebetrieb und/oder in einem (Format-)Wechselbetrieb der Vorrichtung. Insbesondere bevorzugt handelt es sich um ein Verfahren im Einrichtbetrieb/zum Einrichten der Sternübergaben, d.h. der Übergabe eines Behältnisses von einem Einlaufstern zu einer Behandlungseinrichtung und/oder der Übergabe eines Behältnisses von einer Behandlungseinrichtung der Vorrichtung zu einem Auslaufstern. Bevorzugt handelt es sich bei dem Verfahren um ein Verfahren zur Fehleranalyse der Sternübergaben. Insbesondere eignet sich das Verfahren zur Fehleranalyse in einem Testbetrieb der Vorrichtung. Dabei kann bevorzugt die Vorrichtung unter reduzierter Betriebsgeschwindigkeit betrieben werden. Es ist aber auch möglich, unter Produktionsgeschwindigkeit die Übergabevorgänge zu überwachen und/oder zu testen und/oder einzustellen.

In einer vorteilhaften Ausführungsform ist die Inspektionseinrichtung innerhalb eines Reinraumes angeordnet und bevorzugt wird mittels einer außerhalb des Reinraumes angeordneten, besonders bevorzugt mobilen, Bedieneinrichtung und/oder bevorzugt mittels einer außerhalb des Reinraumes angeordneten, besonders bevorzugt mobilen, Anzeigeneinrichtung wenigstens eine Einstellungsänderung an der Inspektionseinrichtung und/oder der Übergabeeinrichtung vorgenommen. Bevorzugt umfasst das Verfahren eine Steuerung, die automatisch (Einstellungs-)Parameter der Inspektionseinrichtung mit vorgegebenen Soll-Parameterbereichen vergleicht und gegebenenfalls, etwa im Falle, dass sich die Parameterwerte außerhalb eines Toleranzbereiches befinden, bevorzugt automatisch Änderungen an der Vorrichtung vornimmt.

Es wird also auch im Rahmen des erfindungsgemäßen Verfahrens vorgeschlagen, dass die (Fein-)Justierung etwa der Übergabeparameter von einem Bediener der Vorrichtung außerhalb des Gehäuses und insbesondere außerhalb des Reinraumes vorgenommen werden kann.

Weitere Vorteile und Ausführungsformen ergeben sich aus den beigefügten Zeichnungen: Darin zeigen:
- Fig. 1: eine schematische Darstellung einer Behandlungseinrichtung einer Vorrichtung zum Behandeln von Kunststoffbehältnissen;
- Fig. 2: eine Schnittdarstellung einer Ausführungsform einer erfindungsgemäßen Vorrichtung zum Behandeln von Kunststoffbehältnissen;
- Fig. 3: eine Detaildarstellung des Behandlungsmoduls mit Inspektionseinrichtung;
- Fig. 4: eine Darstellung einer Übergabe vom Behandlungsmodul ins Blasmodul in einer erfindungsgemäßen Vorrichtung in einer weiteren Ausführungsform;
- Fig. 5: eine schematische Darstellung einer Empfangseinrichtung;
- Fig. 6: eine Darstellung einer mitfahrenden Inspektionseinrichtung am Blasrad;
- Fig. 7: eine perspektivische Darstellung einer mitfahrenden Inspektionseinrichtung am Blasrad von schräg oben;
- Fig. 8: eine Detaildarstellung der Anordnung der Inspektionseinrichtung an der Blasstation;
- Fig. 9: eine weitere Detaildarstellung der Anordnung der Inspektionseinrichtung an der Blasstation;
- Fig. 10: eine Darstellung einer Ausführungsform einer mitfahrenden Inspektionseinrichtung am Blasrad mit Inspektionsrichtung in Laufrichtung;
- Fig. 11: eine weitere Darstellung einer Ausführungsform einer mitfahrenden Inspektionseinrichtung am Blasrad mit Inspektionsrichtung gegen Laufrichtung;
- Fig. 12: eine schematische Darstellung einer weiteren Ausführungsform einer erfindungsgemäßen Vorrichtung mit feststehenden Inspektionseinrichtungen;
- Fig. 13: eine schematische Darstellung einer weiteren Ausführungsform einer erfindungsgemäßen Vorrichtung mit mitfahrenden Inspektionseinrichtungen; und
- Fig. 14: eine schematische Darstellung einer weiteren Ausführungsform einer erfindungsgemäßen Vorrichtung mit einer Gesamtübersicht möglicher Überwachungspunkte.

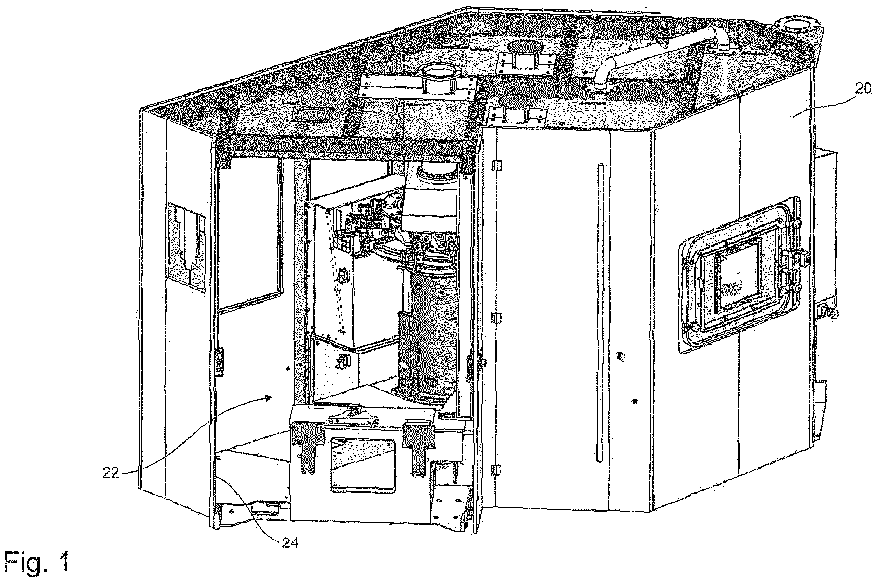

Fig. 1 zeigt eine schematische Darstellung einer Behandlungseinrichtung 20 einer Vorrichtung 1 zum Behandeln von Kunststoffbehältnissen. Diese ist in ein Gehäuse 24 eingebracht um in dessen Inneren einen Reinraum 22 bereitstellen zu können, in dem die Behältnisse vor äußeren Einflüssen geschützt und bevorzugt unter aseptischen Bedingungen behandelt werden können. Ziel ist es einerseits die Vorrichtung 1 insgesamt in möglichst kompakter Bauweise bereitstellen zu können, andererseits aber zugleich eine möglichst hohe Bedienerfreundlichkeit für erforderliche Einstellungen und Justierungen unter anderem an den Übergabepunkten bzw. Übergabebereichen wie den Sternübergaben in die Behandlungskammer 20 und der Übergabe an eine Blasstation 64 im Blasmodul 60 bereitstellen zu können.

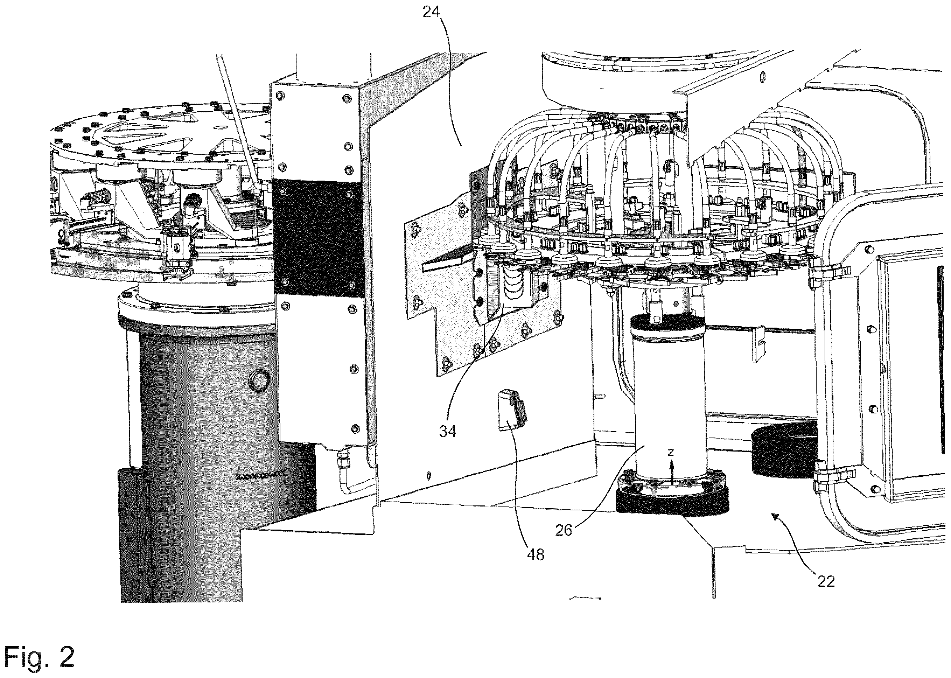

Fig. 2 zeigt eine Schnittdarstellung einer Ausführungsform einer erfindungsgemäßen Vorrichtung 1 zum Behandeln von Kunststoffbehältnissen in der Ansicht von einem Heizmodul der Vorrichtung 1 in ein Behandlungsmodul 26, welches insbesondere ein Sterilisationsmodul sein kann, in der etwa die Kunststoffvorformlinge mit Sterilisationsmittel wie Wasserstoffperoxid beaufschlagt werden können. Gezeigt ist eine Behandlungseinrichtung 20 mit einem Gehäuse 24, innerhalb dessen während des Produktionsbetriebs ein Reinraum 22 ausgebildet ist. An der Innenwand des Gehäuses 24 ist eine Halteeinrichtung 48 (fest verbaut) angeordnet, an der eine Inspektionseinrichtung 40 (in Fig. 2 nicht gezeigt) befestigt werden kann. Die Halteeinrichtung 48 dient der (schnellen) Befestigung der Inspektionseinrichtung 40 an der Vorrichtung 1. Dies bietet den Vorteil, dass die Inspektionseinrichtungen, die während eines Einsatzes von Wasserstoffperoxid in der Sterilisationseinrichtung nicht in dieser verbleiben können, bei Bedarf schnell angeordnet oder entfernt werden können. Mit der Inspektionseinrichtung 40 soll der Übergabepunkt 34 der Behältnisse in das Behandlungsmodul 20, hier das Sterilisationsmodul, von einem außerhalb des Gehäuses 24 befindlichen Bediener überwacht werden können.

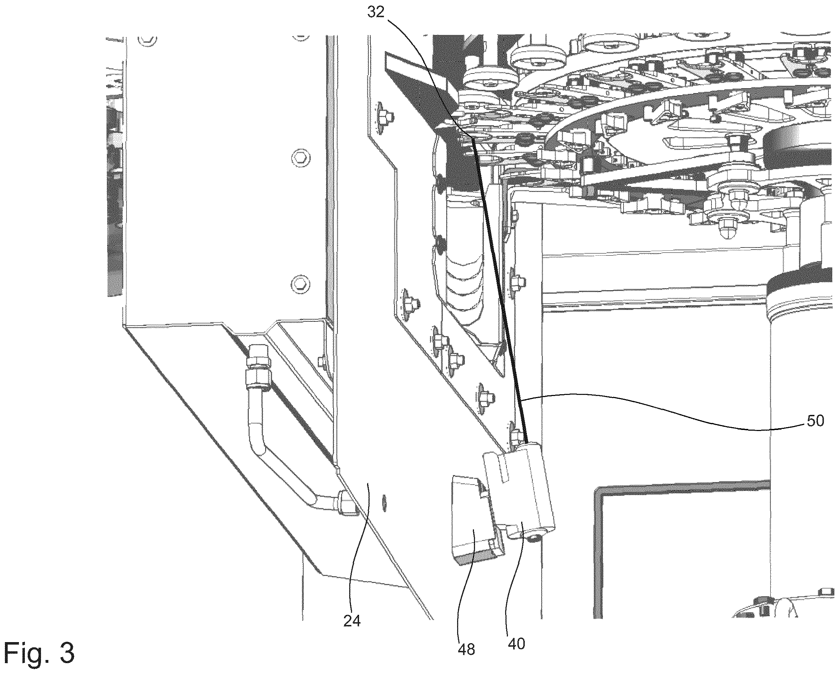

Fig. 3 zeigt eine Detaildarstellung des Behandlungsmoduls 26 mit Inspektionseinrichtung 40, die an die Halteeinrichtung 48 einschiebbar und mit einer Schnappsicherung daran befestigt ist. Die Halteeinrichtung 48 ist an der Innenwand des Gehäuses 24 in dem Bereich unterhalb des Übergabebereiches 32 zwischen einer (nicht gezeigten) Übergabeeinrichtung 30 und der Behandlungseinrichtung 20 angeordnet. Dabei ist die Inspektionseinrichtung 40 so angeordnet, dass dessen Inspektionsrichtung 50 nicht parallel zur Innenwandung des Gehäuses 24 verläuft bzw. auch nicht parallel zur Normalen auf die Bodenfläche verläuft, sondern von schräg unten den Übergabebereich 32, der sich bevorzugt zumindest abschnittsweise in einer Ausnehmung bzw. einer Öffnung des Gehäuses 24 befindet, inspiziert.

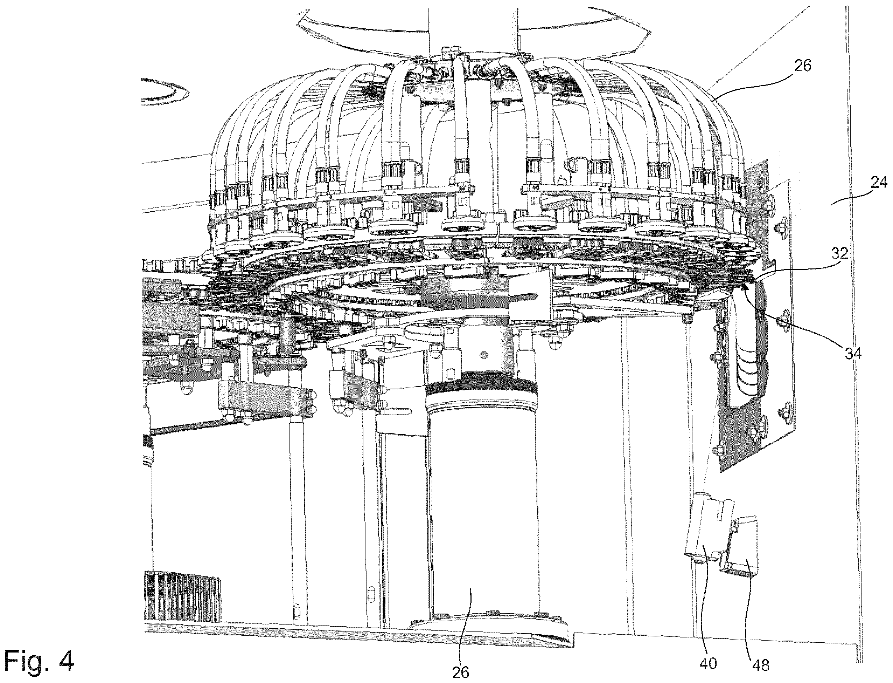

Fig. 4 zeigt eine Darstellung einer Übergabe vom Behandlungsmodul 26, das etwa ein Sterilisationsmodul sein kann, in ein Blasmodul 60 einer erfindungsgemäßen Vorrichtung 1 in einer weiteren Ausführungsform. Wiederum ist in einem Bereich der Innenwand des Gehäuses 24 der Behandlungseinrichtung 20 eine Halteeinrichtung 48 angeordnet, die bevorzugt fest an das Gehäuse 24 verbaut ist und an welche eine Inspektionseinrichtung 40 befestigbar ist. Diese ist dazu geeignet und bestimmt, von schräg unten den Übergabebereich 32 bzw. den Übergabepunkt 34 der Kunststoffvorformlinge an das Blasmodul 60 bzw. an eine Blasstation 64 des Blasmoduls 60 aufzunehmen.

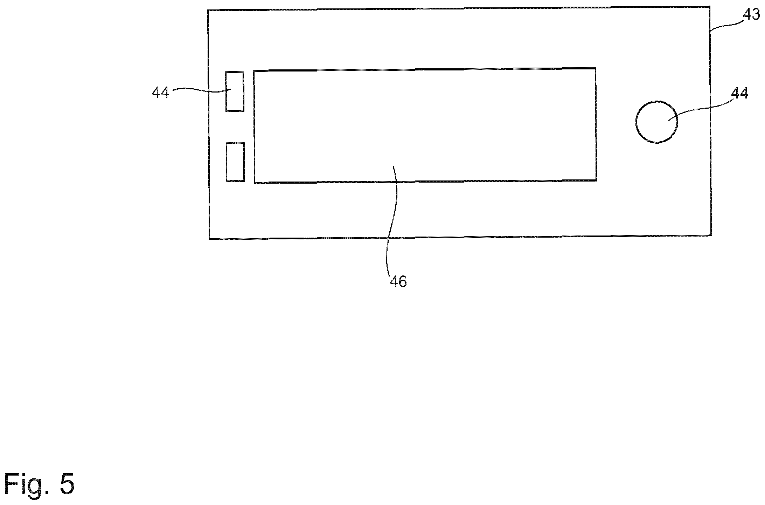

Fig. 5 zeigt eine schematische Darstellung einer Empfangseinrichtung 43, an welche die Inspektionseinrichtung 40 bevorzugt ihre aufgenommenen Daten bzw. Bilder bzw. Videos übermittelt. Dort können sie mittels einer Anzeigeneinrichtung 46 (Display) dem Bediener bevorzugt in Echtzeit visualisiert werden. Die Empfangseinrichtung 43 kann zudem eine Bedieneinrichtung 44 aufweisen, mittels der der Bediener Einstellungen an der Vorrichtung 1 bzw. den Übergabeparametern vornehmen kann. Die gewünschten vorzunehmenden Änderungen werden dabei bevorzugt von der Empfangseinrichtung 43 besonders bevorzugt drahtlos an die Vorrichtung 1 bzw. die Behandlungseinrichtung 20 und/oder die Übergabeeinrichtung 30 übermittelt. Die Empfangseinrichtung 43 kann dabei in der Art einer Armbanduhr ausgestaltet sein, die von dem Bediener am Handgelenk getragen werden kann. Des Weiteren ist es auch möglich, dass mittels der Bedieneinrichtung 44 weitere Einstellungen vorgenommen werden, wie insbesondere aber nicht ausschließlich Einstellungen an der Inspektionseinrichtung 40.

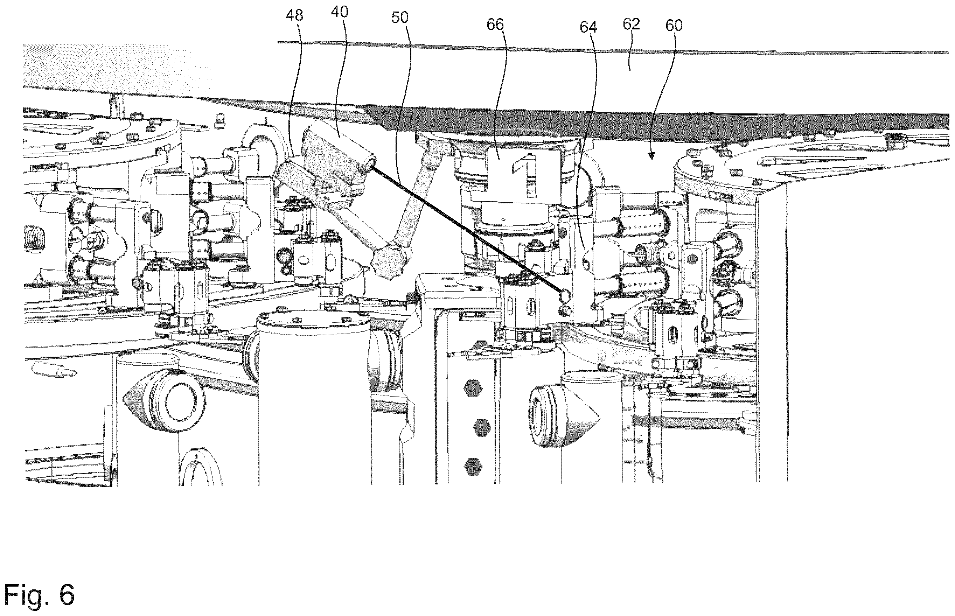

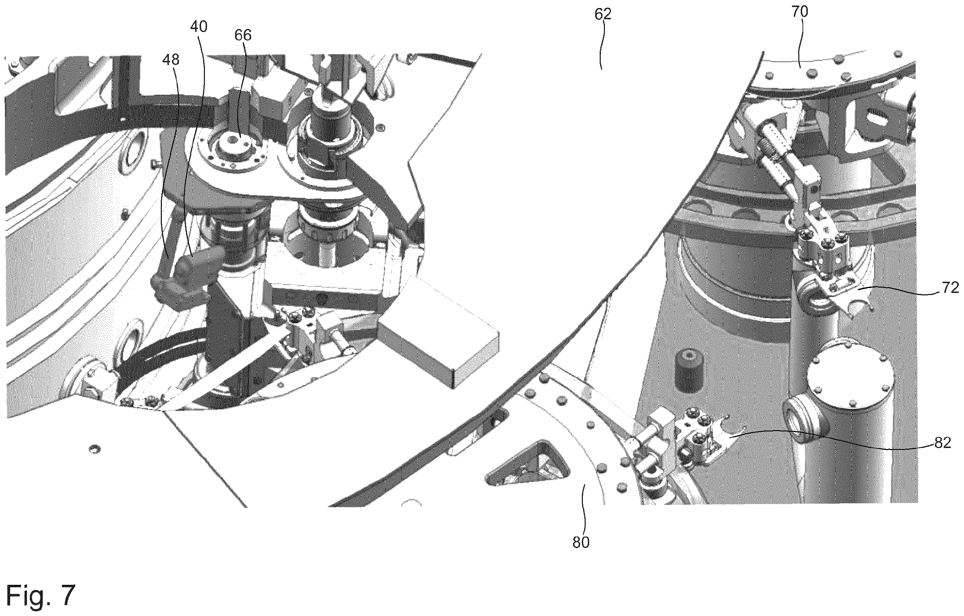

Die Figuren 6 und 7 zeigen eine Darstellung bzw. eine perspektivische Darstellung von schräg oben einer mitfahrenden Inspektionseinrichtung 40 an einem Blasrad 62 in einem Blasmodul 60. Das Blasmodul 60 weist ein Blasrad 62 mit einer Vielzahl daran angeordneter Blasstationen 64 auf, an die vereinzelt Kunststoffvorformlinge übergeben und bevorzugt in der jeweiligen Blasstation 64 zu Behältnissen expandiert werden. Bevorzugt ist dabei die Inspektionseinrichtung 40 an dem Schwenklager 66, besonders bevorzugt an dem Schwenklagergehäuse 68 angeordnet, vorteilhaft mittels einer Halteeinrichtung 48, die in Form einer Halteschiene ausgebildet sein kann. Die Inspektionsrichtung 50 der Inspektionseinrichtung 40 kann dabei an einer vorgegebenen Winkelposition der Blasstation 64, an der die Inspektionseinrichtung 40 angeordnet ist, in Richtung des Übergabebereichs der Vorformlinge an der Zuführeinrichtung 70 verlaufen. Die Zuführeinrichtung 70 kann als Transferrad ausgebildet sein und transportiert die Vorformlinge mittels einer Vielzahl daran angeordneter Halteaufnahmen 72 zu den einzelnen Blasstationen 64 des Blasmoduls 60.

Die Inspektionsrichtung 50 der Inspektionseinrichtung 40 kann aber auch an einer vorgegebenen Winkelposition der Blasstation 64, an der sie angeordnet ist, in Richtung des Übergabebereichs der fertig geblasenen Behältnisse an die Abführeinrichtung 80 verlaufen. Die Abführeinrichtung 80 kann als Transferrad ausgebildet sein und führt die Behältnisse mittels einer Vielzahl daran angeordneter Halteaufnahmen 82 von den einzelnen Blasstationen 64 des Blasmoduls 60 ab. Die an der Blasstation 64 angeordnete Inspektionseinrichtung 40 wird dabei zusammen mit der Vielzahl an Blasstationen 64 um die Drehachse des Blasrades 62 (rotatorisch) mitgeführt, so dass es sich in diesem Falle um eine mitfahrende Kamera/lnspektionseinrichtung 40 handelt.

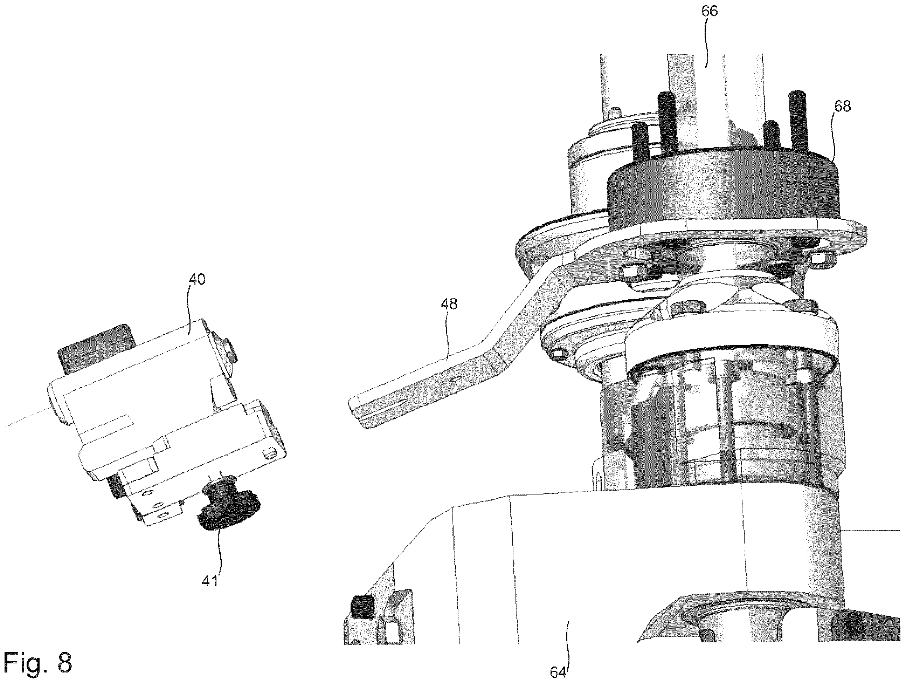

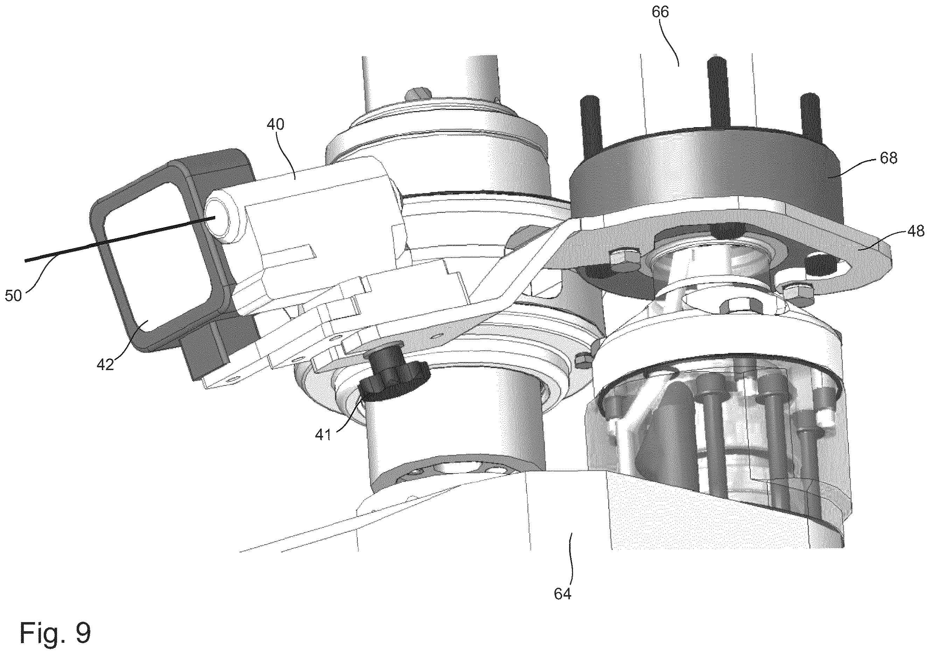

Die Figuren 8 und 9 zeigen jeweils eine Detaildarstellung der Anordnung der Inspektionseinrichtung 40 an der Blasstation 64. Vorgesehen ist hierzu eine Halteeinrichtung 48, die fest an der Blasstation 64 verbaut sein kann und bevorzugt an dem Schwenklager 66 und insbesondere bevorzugt an dem Schwenklagergehäuse 68 der Blasstation 64 angeordnet ist. Die Halteeinrichtung 48 kann derart ausgebildet sein, dass eine Schnellbefestigung der Inspektionseinrichtung 40 an der Halteeinrichtung 48 möglich ist, beispielsweise indem die Inspektionseinrichtung 40 auf die Halteeinrichtung 48 aufgeschoben werden kann und mittels eines Sterngriffs 41 festgezogen werden kann. Optional kann eine Beleuchtungseinrichtung 42 (Videoleuchte) bevorzugt direkt neben der Inspektionseinrichtung 40, auf der Halteeinrichtung 48 angeordnet werden. Diese leuchtet bevorzugt den von der Inspektionseinrichtung 40 zu inspizierenden Bereich der Vorrichtung 1 aus.

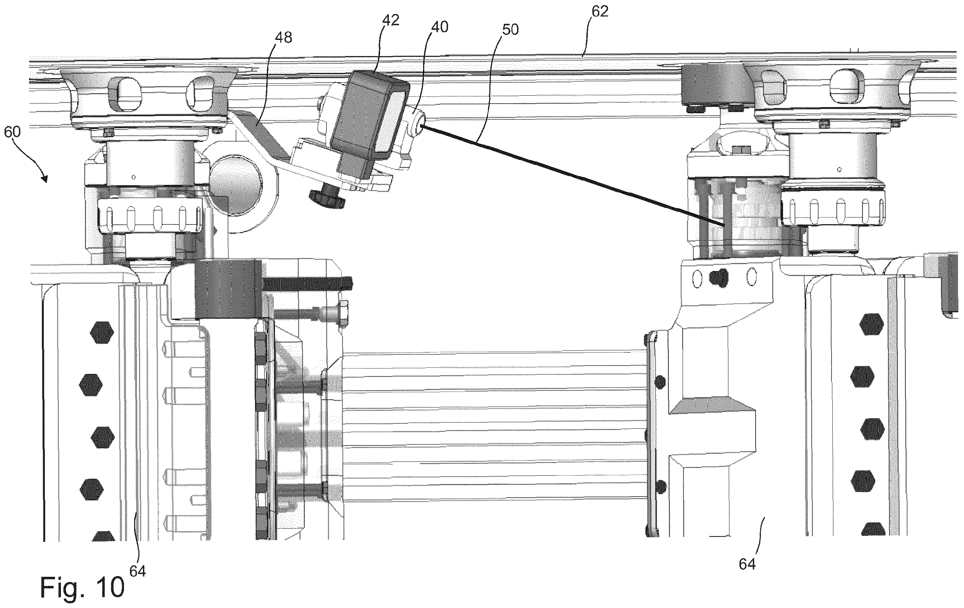

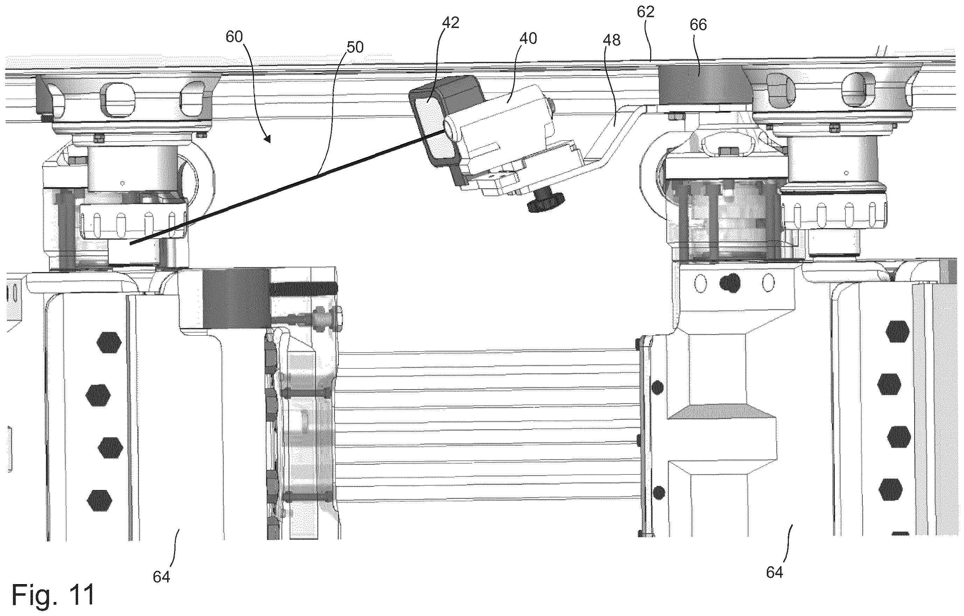

Die beiden Figuren 10 und 11 zeigen jeweils eine Darstellung einer Ausführungsform einer mitfahrenden Inspektionseinrichtung 40 am Blasrad 62 in einem Blasmodul 60 mit Inspektionsrichtung 50, im Falle der Figur 10 in Laufrichtung, und im Falle der Figur 11 gegen Laufrichtung des Blasrades 62 bzw. der daran angeordneten Blasstationen 64. Die in den Figuren 10 und 11 gezeigte Blasstation 64 in dem linken Bereich der beiden Figuren bewegt sich dabei auf einem Kreisbahnabschnitt (aus der Figurenebene in Richtung des Betrachters heraus und) nach rechts (und dann wieder in die Figurenebene hinein), in Richtung der dargestellten Blasstation 64 in dem rechten Bereich der beiden Figuren. Dabei kann wiederum optional zusätzlich zu der Inspektionseinrichtung 40 zur Gewährleistung guter Lichtverhältnisse des aufzunehmenden Bereichs eine Beleuchtungseinrichtung 42 vorgesehen sein, die ebenfalls an der Halteeinrichtung 48 der Inspektionseinrichtung 40 angeordnet sein kann.

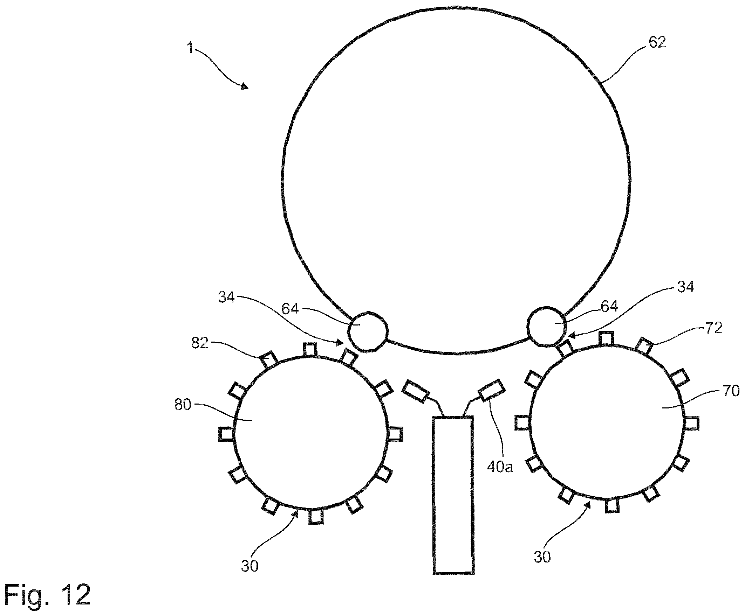

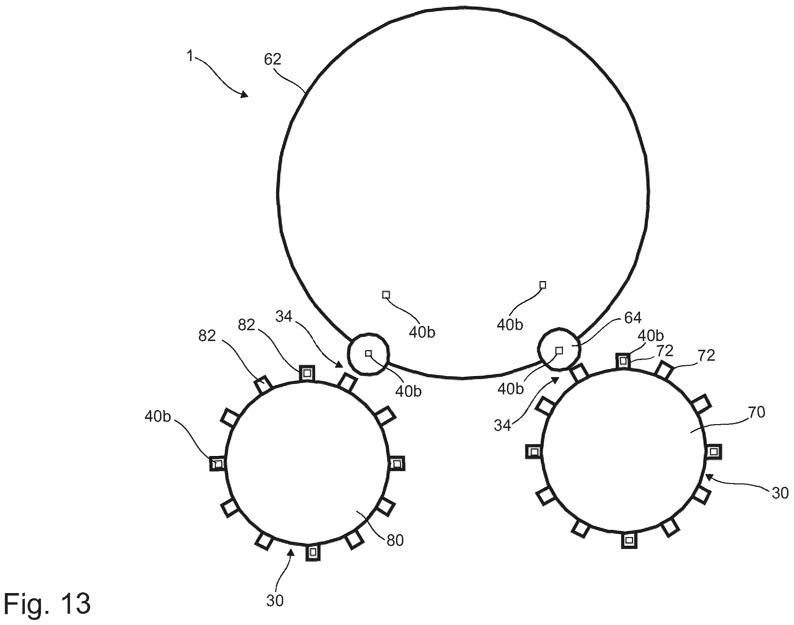

Die Figuren 12 und 13 zeigen jeweils eine schematische Darstellung einer Ausführungsform einer weiteren erfindungsgemäßen Vorrichtung 1. Das Bezugszeichen 62 kennzeichnet ein Blasrad in einem Blasmodul 60, an das eine Vielzahl von Blasstationen 64 angeordnet sind. Innerhalb jeder Blasstation 64 wird ein Kunststoffvorformling, der der jeweiligen Blasstation 64 von einer Übergabeeinrichtung 30, die in Form eines Einlaufsterns 70 mit Halteaufnahmen 72 ausgebildet sein kann, übergeben. Während das Blasrad 62 zusammen mit den daran angeordneten Blasstationen 64 um seine Drehachse rotiert, wird der in der Blasstation 64 befindliche Kunststoffvorformling zu einem Behältnis (Flasche) expandiert und von dieser Behandlungseinrichtung 20, dem Blasmodul 60, an eine weitere Übergabeeinrichtung 30 übergeben. Letztere kann ebenfalls als Transferrad, einem Auslaufstern 80 mit Halteaufnahmen 82 für die Behältnisse, ausgebildet sein. Im Falle der Fig. 12 sind zur Beobachtung der beiden Übergabepunkte 34, von denen sich einer an der Übergabe der Kunststoffvorformlinge von dem Einlaufstern 70 an das Blasrad 62 bzw. eine daran angeordnete Blasstation 64 befindet und sich der andere an der Übergabe der fertig geblasenen Kunststoffbehältnisse aus der Blasstation 64 zum Auslaufstern 80 befindet, zwei feststehende (d.h. in der Vorrichtung 1 stationär angeordnete) Inspektionseinrichtungen 40a vorgesehen. Diese bewegen sich bevorzugt nicht mit den zu behandelnden Behältnissen, auch nicht abschnittsweise oder zeitweise, mit. Die beiden feststehenden Inspektionseinrichtungen 40a können dabei zwischen dem Einlaufstern 70 und dem Auslaufstern 80 angeordnet sein. Bevorzugt sind je Blasrad 62 lediglich genau zwei feststehende Inspektionseinrichtungen 40a erforderlich.

Dagegen sind in der in Fig. 13 gezeigten Ausführungsform mitfahrende Inspektionseinrichtungen 40b vorgesehen. Für diese gibt es mehrere Möglichkeiten der Anordnung. Zum einen können sie an der Blasstation 64 des Blasrades 62 angeordnet sein. Sie können jedoch auch direkt oder zusätzlich an dem Blasrad 62 selbst angeordnet sein. Bevorzugt ist je Blasstation 64 eine mitfahrende Inspektionseinrichtung 40b an der Blasstation 64 und eine weitere an dem Blasrad 62 in unmittelbarer Nähe dieser Blasstation 64 angeordnet. Die eine mitfahrende Inspektionseinrichtung 40b kann dann zur Überwachung des einen Übergabepunktes 34 bei der Aufnahme der Kunststoffvorformlinge genutzt werden und die zweite zur Überwachung des Übergabepunktes 34 bei der Abgabe der fertig geblasenen Behältnisse an den Auslaufstern 80 genutzt werden. Eine weitere Möglichkeit besteht darin, die mitfahrenden Inspektionseinrichtungen 40b bzw. wenigstens eine mitfahrende Inspektionseinrichtungen an den (sich bevorzugt drehenden) Übergabeeinrichtungen 30 anzuordnen. Beispielsweise können die mitfahrenden Inspektionseinrichtungen 40b an den Halteaufnahmen 72 des Einlaufsterns 70 und/oder den Halteaufnahmen 82 des Auslaufsterns 80 angeordnet werden. Bevorzugt ist in dem Einlaufstern 70 bzw. in dem Auslaufstern 80 je Halteaufnahme 72/82 eine mitfahrende Inspektionseinrichtung 40b angeordnet.

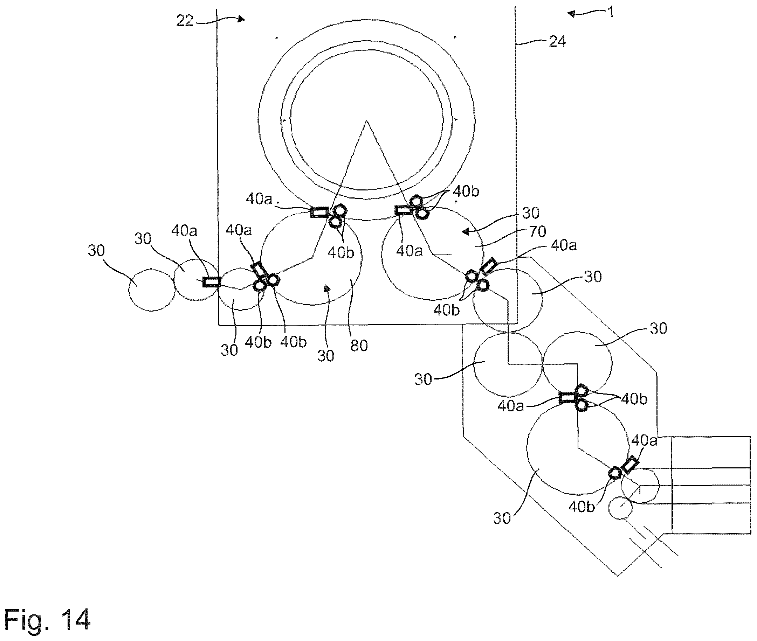

Fig. 14 zeigt schließlich eine schematische Darstellung einer weiteren Ausführungsform einer erfindungsgemäßen Vorrichtung 1 mit mehreren Übergabeeinrichtungen 30 mit einer Gesamtübersicht möglicher Überwachungspunkte 34, die mittels feststehenden Inspektionseinrichtungen 40a und/oder mittels mitfahrenden Inspektionseinrichtungen 40b überwacht werden können. Dabei ist bevorzugt ein Teil der Übergabeeinrichtungen innerhalb eines Gehäuses 24 angeordnet, in dem bevorzugt ein Reinraum 22 vorherrscht.

### Bezugszeichenliste

- 1: Vorrichtung
- 20: Behandlungseinrichtung
- 22: Reinraum
- 24: Gehäuse
- 26: Behandlungsmodul
- 30: Übergabeeinrichtung
- 32: Übergabebereich
- 34: Übergabepunkt
- 40: Inspektionseinrichtung
- 40a: feststehende Inspektionseinrichtung
- 40b: mitfahrende Inspektionseinrichtung
- 41: Sterngriff
- 42: Beleuchtungseinrichtung
- 43: Empfangseinrichtung
- 44: Bedieneinrichtung
- 46: Anzeigeneinrichtung
- 48: Halteeinrichtung
- 50: Inspektionsrichtung
- 60: Blasmodul
- 62: Blasrad
- 64: Blasstation
- 66: Schwenklager
- 68: Schwenklagergehäuse
- 70: Zuführeinrichtung
- 72: Halteaufnahme
- 80: Abführeinrichtung
- 82: Halteaufnahme

## Patentansprüche

1. Vorrichtung (1) zum Behandeln von Behältnissen mit wenigstens einer Behandlungseinrichtung (20), die die Behältnisse in einer vorbestimmten Weise behandelt, und mit wenigstens einer Übergabeeinrichtung (30), welche die Behältnisse in einem Übergabebereich (32) an die Behandlungseinrichtung (20) vereinzelt übergibt und/oder an welche die Behältnisse von der Behandlungseinrichtung (20) in einem Übergabebereich (32) übergeben werden, wobei wenigstens eine Inspektionseinrichtung (40) vorgesehen ist, die dazu geeignet und bestimmt ist, den Übergabebereich (32) optisch zu inspizieren, **dadurch gekennzeichnet, dass** die Inspektionseinrichtung dazu angepassst ist wenigstens einen Übergabebereich zu einem Zeitpunkt zu inspizieren, an dem keine Behältnisse übergeben werden, so dass das Ineinandergreifen einzelner Elemente der Vorrichtung, der zeitabhängigen relativen Anordnung von Elementen der Übergabeeinrichtung gegenüber Elementen der Behandlungseinrichtungen, beobachtet werden kann.

2. Vorrichtung (1) nach Anspruch 1,
**dadurch gekennzeichnet, dass**
die Inspektionseinrichtung (40) innerhalb eines Reinraumes (22) angeordnet ist.

3. Vorrichtung (1) nach wenigstens einem der vorangegangenen Ansprüche,
**dadurch gekennzeichnet, dass**
es sich bei der Übergabeeinrichtung (30) um einen der Behandlungseinrichtung (20) zugeordneten Einlaufstern (70) und/oder Auslaufstern (80) handelt.

4. Vorrichtung (1) nach wenigstens einem der vorangegangenen Ansprüche,
**dadurch gekennzeichnet, dass**
es sich bei der Behandlungseinrichtung (20) um ein Sterilisationsmodul (90) oder ein Blasmodul (60) handelt.

5. Vorrichtung (1) nach wenigstens einem der vorangegangenen Ansprüche,
**dadurch gekennzeichnet, dass**
die Inspektionseinrichtung (40) den Übergabebereich (32) von unten inspiziert.

6. Vorrichtung (1) nach wenigstens einem der vorangegangenen Ansprüche,
**dadurch gekennzeichnet, dass**
die wenigstens eine Inspektionseinrichtung (40) und bevorzugt alle Inspektionseinrichtungen (40) stationär in der Vorrichtung (1) angeordnet ist/sind.

7. Vorrichtung (1) nach wenigstens einem der Ansprüche 1 - 5,
**dadurch gekennzeichnet, dass**
die wenigstens eine Inspektionseinrichtung (40) und bevorzugt alle Inspektionseinrichtungen (40) an einem sich bewegenden Element der Vorrichtung (1), bevorzugt der Behandlungseinrichtung (20) angeordnet ist/sind und mitgeführt wird/werden.

8. Vorrichtung (1) nach wenigstens einem der vorangegangenen Ansprüche,
**dadurch gekennzeichnet, dass**
eine Inspektionsrichtung (50) der Inspektionseinrichtung (40) im Wesentlichen in oder entgegen der Transportrichtung der Behältnisse verläuft.

9. Vorrichtung (1) nach wenigstens einem der vorangegangenen Ansprüche,
**dadurch gekennzeichnet, dass**
eine bevorzugt an der oder neben der Inspektionseinrichtung (40) angeordnete Beleuchtungseinrichtung (42) vorgesehen ist, die zumindest einen Teil der Behandlungseinrichtung (20) und/oder den Übergabebereich (32) bevorzugt zumindest zeitweise während einer Bildaufnahme der Inspektionseinrichtung (40) beleuchtet.

10. Vorrichtung (1) wenigstens einem der vorangegangenen Ansprüche,
**dadurch gekennzeichnet, dass**
eine bevorzugt mobile Bedieneinrichtung (44), mittels der Einstellungsänderungen an der Inspektionseinrichtung (40) und/oder der Übergabeeinrichtung (30) vorgenommen werden können, und/oder eine bevorzugt mobile Anzeigeneinrichtung (46), mittels der von der Inspektionseinrichtung (40) aufgenommene Daten ausgegeben und/oder visualisiert werden können, vorgesehen ist.

11. Vorrichtung (1) wenigstens einem der vorangegangenen Ansprüche,
**dadurch gekennzeichnet, dass**
die Vorrichtung eine stationär an der Vorrichtung angeordnete Bedieneinrichtung aufweist.

12. Vorrichtung (1) wenigstens einem der vorangegangenen Ansprüche,
**dadurch gekennzeichnet, dass**
die Vorrichtung eine Speichereinrichtung zum wenigstens zeitweisen Speichern von aufgenommenen Bildsequenzen aufweist.

13. Vorrichtung (1) nach wenigstens einem der vorangegangenen Ansprüche,
**dadurch gekennzeichnet, dass**
die Vorrichtung (1) eine Steuerungseinrichtung aufweist, die dazu geeignet und bestimmt ist, in Abhängigkeit der von der Inspektionseinrichtung (40) aufgenommenen Daten automatisch und/oder manuell Änderungen an den Übergabeparametern der Übergabeeinrichtung (30) und/oder der Behandlungseinrichtung (20) vorzunehmen.

14. Vorrichtung (1) nach wenigstens einem der vorangegangenen Ansprüche,
**dadurch gekennzeichnet, dass**
die Inspektionseinrichtung (40) mittels einer Klemmbefestigung oder einer Schnellbefestigung an der Vorrichtung (1) angeordnet ist.

15. Verfahren zur Überwachung und/oder Justierung einer Vorrichtung (1) zum Behandeln von Behältnissen mit wenigstens einer Behandlungseinrichtung (20), die die Behältnisse in einer vorbestimmten Weise behandelt, mit wenigstens einer Übergabeeinrichtung (30), welche die Behältnisse in einem Übergabebereich (32) an die Behandlungseinrichtung (20) übergibt und/oder an welche die Behältnisse von der Behandlungseinrichtung (20) in einem Übergabebereich (32) übergeben werden, wobei mittels wenigstens einer Inspektionseinrichtung (40) wenigstens abschnittsweise zumindest ein Teil des Übergabebereichs (32) optisch inspiziert wird, **dadurch gekennzeichnet, dass** die Inspektionseinrichtung wenigstens einen Übergabebereich zu einem Zeitpunkt inspiziert, an dem keine Behältnisse übergeben werden, so dass das Ineinandergreifen einzelner Elemente der Vorrichtung, der zeitabhängigen relativen Anordnung von Elementen der Übergabeeinrichtung gegenüber Elementen der Behandlungseinrichtungen, beobachtet werden kann.

16. Verfahren nach Anspruch 15,
**dadurch gekennzeichnet, dass**
die Inspektionseinrichtung (40) innerhalb eines Reinraumes (22) angeordnet ist und bevorzugt mittels einer außerhalb des Reinraumes (22) angeordneten, besonders bevorzugt mobilen, Bedieneinrichtung (44) und/oder bevorzugt mittels einer außerhalb des Reinraumes (22) angeordneten, besonders bevorzugt mobilen, Anzeigeneinrichtung (46) automatisch und/oder manuell Einstellungsänderungen an der Inspektionseinrichtung (40) und/oder der Übergabeeinrichtung (30) vorgenommen werden.

## Claims

1. Apparatus (1) for processing containers comprising at least one processing device (20) which processes the containers in a predetermined manner, and comprising at least one transfer device (30), which transfers the containers individually to the treatment device (20) in a transfer region (32) and/or to which the containers are transferred from the treatment device (20) in a transfer region (32),
wherein at least one inspection device (40) is provided, which is suitable and intended for visually inspecting the transfer region (32), **characterised in that**
the inspection device is configured for inspecting at least one transfer region at a time when no containers are being transferred, so that the interengagement of individual elements of the apparatus, the time-dependent relative arrangement of elements of the transfer device relative to elements of the processing device can be observed.

2. Apparatus (1) according to claim 1,
**characterised in that**
the inspection device (40) is arranged inside a clean room (22).

3. Apparatus (1) according to at least one of the preceding claims, **characterised in that**
the transfer device (30) is a feed starwheel (70) and/or discharge starwheel (80) associated with the processing device (20).

4. Apparatus (1) according to at least one of the preceding claims, **characterised in that**
the processing device (20) is a sterilisation module (90) or a blow moulding module (60).

5. Apparatus (1) according to at least one of the preceding claims, **characterised in that**
the inspection device (40) inspects the transfer region (32) from below.

6. Apparatus (1) according to at least one of the preceding claims, **characterised in that**
the at least one inspection device (40) and preferably all inspection devices (40) is/are arranged stationary in the apparatus (1).

7. Apparatus (1) according to at least one of claims 1 to 5,
**characterised in that**
the at least one inspection device (40) and preferably all inspection devices (40) is/are arranged and carried along on a moving element of the apparatus (1), preferably the processing device (20).

8. Apparatus (1) according to at least one of the preceding claims, **characterised in that**
an inspection direction (50) of the inspection device (40) extends substantially in or contrary to the transport direction of the containers.

9. Apparatus (1) according to at least one of the preceding claims, **characterised in that**
an illumination device (42) is provided preferably on the inspection device (40) or adjacent thereto, and illuminates at least a part of the processing device (20) and/or the transfer region (32) preferably at least temporarily during an image recording of the inspection device (40).

10. Apparatus (1) according to at least one of the preceding claims, **characterised in that**
a preferably mobile operating device (44) can be provided, by means of which changes to settings can be carried out on the inspection device (40) and/or the transfer device (30), and/or a preferably mobile display device (46) can be provided, by means of which data recorded by the inspection device (40) can be output and/or displayed.

11. Apparatus (1) according to at least one of the preceding claims, **characterised in that**
the apparatus has an operating device arranged stationary on the apparatus.

12. Apparatus (1) according to at least one of the preceding claims, **characterised in that**
the apparatus has a storage device for at least temporary storage of recorded image sequences.

13. Apparatus (1) according to at least one of the preceding claims, **characterised in that**
the apparatus (1) has a control device which, as a function of the data recorded by the inspection device (40), is suitable and intended for automatically and/or manually carrying out, changes to the transfer parameters of the transfer device (30) and/or the processing device (20).

14. Apparatus (1) according to at least one of the preceding claims, **characterised in that**
the inspection device (40) is arranged on the apparatus (1) by means of a clamp fastening or a quick fastening.

15. Method for monitoring and/or adjusting an apparatus (1) for processing containers with at least one processing device (20) which processes the containers in a predetermined manner, and with at least one transfer device (30), which transfers the containers to the processing device (20) in a transfer region (32) and/or to which the containers are transferred from the processing device (20) in a transfer region (32),
wherein by means of at least one inspection device (40) at least in sections at least a part of the transfer region (32) is visually inspected, **characterised in that**
the inspection device inspects at least one transfer region at a time when no containers are being transferred, so that the interengagement of individual elements of the apparatus, the time-dependent relative arrangement of elements of the transfer device relative to elements of the processing device can be observed.

16. Method according to claim 15,
**characterised in that**
the inspection device (40) is arranged inside a clean room (22) and preferably changes to the settings are carried out automatically and/or manually on the inspection device (40) and/or the transfer device (30) by means of a particularly preferably mobile operating device (44) arranged preferably outside the clean room (22), and/or by means of a particularly preferably mobile display device (46) arranged preferably outside the clean room (22).

## Revendications

1. Dispositif (1) de traitement de récipients avec au moins un système de traitement (20), qui traite les récipients d'une manière prédéfinie, et avec au moins un système de transfert (30), lequel transfère séparément au système de traitement (20) dans une zone de transfert (32) les récipients et/ou sur lequel les récipients sont transférés par le système de traitement (20) dans une zone de transfert (32),
dans lequel est prévu au moins un système d'inspection (40), qui est adapté pour et se destine à inspecter de manière optique la zone de transfert (32),
**caractérisé en ce que**
le système d'inspection est adapté pour inspecter au moins une zone de transfert à un moment où aucun récipient n'est transféré de sorte que l'imbrication de divers éléments du dispositif, de l'agencement relatif selon le temps d'éléments du système de transfert par rapport à des éléments des systèmes de traitement peut être observée.

2. Dispositif (1) selon la revendication 1,
**caractérisé en ce que**
le système d'inspection (40) est disposé à l'intérieur d'une salle blanche (22).

3. Dispositif (1) selon au moins l'une quelconque des revendications précédentes,
**caractérisé en ce que**
le système de transfert (30) est une étoile d'admission (70) et/ou une étoile de sortie (80) associée au système de traitement (20).

4. Dispositif (1) selon au moins l'une quelconque des revendications précédentes,
**caractérisé en ce que**
le système de traitement (20) est un module de stérilisation (90) ou un module de soufflage (60).

5. Dispositif (1) selon au moins l'une quelconque des revendications précédentes,
**caractérisé en ce que**
le système d'inspection (40) inspecte la zone de transfert (32) depuis le bas.

6. Dispositif (1) selon au moins l'une quelconque des revendications précédentes,
**caractérisé en ce que**
l'au moins un système d'inspection (40) et de manière préférée tous les systèmes d'inspection (40) est disposé/sont disposés de manière stationnaire dans le dispositif (1).

7. Dispositif (1) selon au moins l'une quelconque des revendications 1 - 5, **caractérisé en ce que**
l'au moins un système d'inspection (40) et de manière préférée tous les systèmes d'inspection (40) est disposé/sont disposés sur un élément en mouvement du dispositif (1), de manière préférée du système de traitement (20) et est entraîné/sont entraînés.

8. Dispositif (1) selon au moins l'une quelconque des revendications précédentes,
**caractérisé en ce que**
une direction d'inspection (50) du système d'inspection (40) s'étend sensiblement dans la direction de transport ou dans le sens opposé à celle-ci des récipients.

9. Dispositif (1) selon au moins l'une quelconque des revendications précédentes,
**caractérisé en ce que**
un système d'éclairage (42) disposé de manière préférée sur ou à côté du système d'inspection (40) est prévu, lequel éclaire au moins une partie du système de traitement (20) et/ou la zone de transfert (32) de manière préférée au moins par intermittence pendant un enregistrement d'image du système d'inspection (40).

10. Dispositif (1) selon au moins l'une quelconque des revendications précédentes,
**caractérisé en ce que**
un système d'utilisation (44) de manière préférée mobile, au moyen duquel des modifications de réglage peuvent être effectuées sur le système d'inspection (40) et/ou sur le système de transfert (30), et/ou un système d'affichage (46) de manière préférée mobile, au moyen duquel des données enregistrées par le système d'inspection (40) peuvent être éditées et/ou visualisées, sont prévus.

11. Dispositif (1) selon au moins l'une quelconque des revendications précédentes,
**caractérisé en ce que**
le dispositif présente un système d'utilisation disposé de manière stationnaire sur le dispositif.

12. Dispositif (1) selon au moins l'une quelconque des revendications précédentes,
**caractérisé en ce que**
le dispositif présente un système de stockage pour stocker au moins par intermittence des séquences d'images enregistrées.

13. Dispositif (1) selon au moins l'une quelconque des revendications précédentes,
**caractérisé en ce que**
le dispositif (1) présente un système de commande, qui est adapté pour et se destine à effectuer automatiquement et/ou manuellement des modifications sur les paramètres de transfert du système de transfert (30) et/ou du système de traitement (20) en fonction des données enregistrées par le système d'inspection (40).

14. Dispositif (1) selon au moins l'une quelconque des revendications précédentes,
**caractérisé en ce que**
le système d'inspection (40) est disposé sur le dispositif (1) au moyen d'une fixation par serrage ou d'une fixation rapide.

15. Procédé de surveillance et/ou d'ajustement d'un dispositif (1) pour traiter des récipients avec au moins un système de traitement (20), qui traite les récipients d'une manière prédéfinie, avec au moins un système de transfert (30), lequel transfère les récipients dans une zone de transfert (32) sur le système de traitement (20) et/ou sur lequel les récipients sont transférés par le système de traitement (20) dans une zone de transfert (32),
dans lequel au moins une partie de la zone de transfert (32) est inspectée de manière optique au moyen d'au moins un système d'inspection (40), **caractérisé en ce que** le système d'inspection inspecte au moins une zone de transfert à un moment, auquel aucun récipient n'est transféré, de sorte que l'imbrication de divers éléments du dispositif, de l'agencement relatif selon le temps d'éléments du système de transfert par rapport à des éléments des systèmes de traitement peut être observée.

16. Procédé selon la revendication 15,
**caractérisé en ce que**
le système d'inspection (40) est disposé à l'intérieur d'une salle blanche (22) et des modifications de réglage sur le système d'inspection (40) et/ou le système de transfert (30) sont effectuées automatiquement et/ou manuellement de manière préférée au moyen d'un système d'utilisation (44), de manière particulièrement préférée mobile, disposé à l'extérieur de la salle blanche (22), et/ou de manière préférée au moyen d'un système d'affichage (46), de manière particulièrement préférée mobile, disposé à l'extérieur de la salle blanche (22).
